(19)

**Europäisches Patentamt**
**European Patent Office**
**Office européen des brevets**

(11) **EP 4 667 310 A1**

(12) **EUROPEAN PATENT APPLICATION**
published in accordance with Art. 153(4) EPC

(43) Date of publication:
**24.12.2025 Bulletin 2025/52**

(21) Application number: **24769802.0**

(22) Date of filing: **05.03.2024**

(51) International Patent Classification (IPC):
***B60W 30/06*** (2006.01)     ***G01C 21/34*** (2006.01)

(52) Cooperative Patent Classification (CPC):
**B62D 15/0285; B60W 30/06; G01C 21/34**

(86) International application number:
**PCT/CN2024/080119**

(87) International publication number:
**WO 2024/188108 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.03.2023 CN 202310284876**

(71) Applicant: **Shenzhen Yinwang Intelligent
Technologies Co., Ltd.
Shenzhen, Guangdong 518110 (CN)**

(72) Inventors:
• YUAN, Jun
  Shenzhen, Guangdong 518129 (CN)
• CHEN, Cheng
  Shenzhen, Guangdong 518129 (CN)
• TONG, Liuzhu
  Shenzhen, Guangdong 518129 (CN)
• ZHANG, Yu
  Shenzhen, Guangdong 518129 (CN)
• WANG, Xinyu
  Shenzhen, Guangdong 518129 (CN)

(74) Representative: **Gill Jennings & Every LLP
The Broadgate Tower
20 Primrose Street
London EC2A 2ES (GB)**

(54) **AUTOMATIC PARKING METHOD AND APPARATUS**

(57) An automatic parking method and apparatus are provided. The method includes: obtaining a first candidate path point and a second candidate path point, where the first candidate path point is located in a first area, and the second candidate path point is located in a second area; determining a first cost based on a type of the first area and a location relationship between the first candidate path point and the first area, and determining a second cost based on a type of the second area and a location relationship between the second candidate path point and the second area; and planning a parking path based on the first cost and the second cost. The automatic parking apparatus, an automatic parking system, and a vehicle (100) that use the method are further provided. A parking path is planned based on a type of an area in which a candidate path point is located, so that a possibility that a vehicle passes in an area like a grass, a crossable curb, or a crossable pit can be reduced, and automatic parking experience can be improved.

300

Obtain a first candidate path point and a second candidate path point, where the first candidate path point is located in a first area, and the second candidate path point is located in a second area — S310

Determine a first cost based on a type of the first area and a location relationship between the first candidate path point and the first area, and determine a second cost based on a type of the second area and a location relationship between the second candidate path point and the second area — S320

Plan a parking path based on the first cost and the second cost — S330

FIG. 3

**Description**

This application claims priority to Chinese Patent Application No. 202310284876.2, filed with the China National Intellectual Property Administration on March 15, 2023 and entitled "AUTOMATIC PARKING METHOD AND APPARATUS", which is incorporated herein by reference in its entirety.

**TECHNICAL FIELD**

Embodiments of this application relate to the field of intelligent driving, and more specifically, to an automatic parking method and apparatus.

**BACKGROUND**

With rapid development of the vehicle industry, many assisted driving and automatic driving technologies such as an automatic parking technology are generated, to reduce driving pressure, and improve safety and convenience. However, in a conventional automatic parking solution, a parking path planning manner is excessively undiversified. As a result, a planned parking path is greatly different from a parking path in a manual parking scenario, that is, automatic parking has poor hominine potential, and automatic parking experience of a user is affected.

Therefore, there is an urgent need to develop an automatic parking solution that can improve parking experience.

**SUMMARY**

Embodiments of this application provide an automatic parking method and apparatus, so that a parking path can be planned based on a type of an area in which a candidate path point is located, to improve automatic parking experience.

According to a first aspect, an automatic parking method is provided. The method may be performed by a vehicle, or may be performed by a terminal (for example, a computing platform) disposed in the vehicle, or may be performed by a chip or a processing circuit in the terminal. This is not limited in embodiments of this application.

The method includes: obtaining a first candidate path point and a second candidate path point, where the first candidate path point is located in a first area, and the second candidate path point is located in a second area; determining a first cost based on a type of the first area and a location relationship between the first candidate path point and the first area, and determining a second cost based on a type of the second area and a location relationship between the second candidate path point and the second area; and planning a parking path based on the first cost and the second cost.

In this application, a passing cost of an area in which a candidate path point is located may be determined based on a type of the area in which the candidate path point is located and a location relationship between the candidate path point and the area. Areas in a parking environment in which the vehicle is located are identified, so that during automatic parking, a possibility that the vehicle passes in an unexpected passing area like a grass, a crossable curb, or a crossable pit in a manual parking scenario can be reduced, and automatic parking experience can be improved.

With reference to the first aspect, in some implementations of the first aspect, the vehicle is at a first gear in a first planned path, the vehicle is at a second gear in a first candidate path, the first candidate path is a predicted path between the first planned path and the first candidate path point, and the method may further include: obtaining a first speed at which the vehicle passes through the first planned path and first duration in which the vehicle passes through the first candidate path; when the first gear is different from the second gear, determining a first traveling distance based on the first speed and the first duration; and determining a third cost based on the first traveling distance and a length of the first candidate path. The planning a parking path based on the first cost and the second cost may include: planning the parking path based on the first cost, the second cost, and the third cost.

In this application, when the candidate path point involves gear shift, a distance that can be traveled by the vehicle in the first duration in a non-gear shift case, that is, the first traveling distance, may be determined based on the first speed at which the vehicle passes through the first planned path; a distance that can be traveled by the vehicle in the first duration in a non-gear shift case, that is, the length of the first candidate path, may be determined by obtaining the first candidate path; and then a gear shift cost corresponding to the candidate path point is determined. In this manner, unnecessary gear shift can be reduced, and parking efficiency can be improved.

With reference to the first aspect, in some implementations of the first aspect, the method further includes: obtaining a first steer angle at which the vehicle passes through a second planned path and a second steer angle at which the vehicle passes through a second candidate path, where the second candidate path is a predicted path between the second planned path and the first candidate path point; and when a direction of the first steer angle is different from a direction of the second steer angle, determining a fourth cost based on the first steer angle and the second steer angle. The planning a parking path based on the first cost and the second cost includes: planning the parking path based on the first cost, the second cost, and the fourth cost.

In this application, when the direction of the first steer angle is different from the direction of the second steer angle, a candidate path corresponding to the candidate path point causes a steering cost caused by determining the candidate path point based on the first steer angle and the second steer angle when there is an S-shaped path in a parking trajectory. This can reduce difficulty of tracking a trajectory by an execution layer, reduce a probability of manual takeover, and reduce a collision risk while ensuring parking efficiency, thereby further improving trust of the user in automatic parking.

With reference to the first aspect, in some implementations of the first aspect, the first steer angle is a maximum value in steer angles used by the vehicle when the vehicle passes through the second planned path.

In this application, the maximum value in the steer angles used by the vehicle when the vehicle passes through the second planned path is used, so that impact caused by a change of the steer angle used by the vehicle in the second planned path can be reduced, and impact of positive returning of the steer angle of the vehicle on the steering cost of the S-shaped path can be reduced.

With reference to the first aspect, in some implementations of the first aspect, the method further includes: determining a type of a surrounding obstacle; and determining a fifth cost based on a distance between the first candidate path point and the surrounding obstacle and the type of the surrounding obstacle, and determining a sixth cost based on a distance between the second candidate path point and the surrounding obstacle and the type of the surrounding obstacle. The planning a parking path based on the first cost and the second cost includes: planning the parking path based on the first cost, the second cost, the fifth cost, and the sixth cost.

In this application, a collision avoidance cost is evaluated based on a type of an obstacle, so that more safe space can be reserved for a non-extreme scenario, security and passability of the parking path can be improved, and user experience of automatic parking can be further improved.

With reference to the first aspect, in some implementations of the first aspect, the type of the obstacle includes a dynamic obstacle or a static obstacle.

In this application, a risk of collision between the vehicle and an obstacle during parking is evaluated based on division of the dynamic obstacle and the static obstacle. In this way, a risk of collision caused by sudden movement of the dynamic obstacle can be reduced while passability of a parking trajectory is considered, so that tension caused to the user in this scenario can be avoided, security of the parking path can be improved, and user experience can be improved.

With reference to the first aspect, in some implementations of the first aspect, the vehicle is at a third gear in a third candidate path, the vehicle is at a fourth gear in a fourth candidate path, the third candidate path is a predicted path between a third planned path and the first candidate path point, the fourth candidate path is a predicted path between the third planned path and the second candidate path point, and the method further includes: determining a first gear cost coefficient based on the third gear, and determining a second gear cost coefficient based on the fourth gear; and determining a seventh cost based on the first gear cost coefficient and a length of the third candidate path, and determining an eighth cost based on the second gear cost coefficient and a length of the fourth candidate path. The planning a parking path based on the first cost and the second cost includes: planning the parking path based on the first cost, the second cost, the seventh cost, and the eighth cost.

In this application, a gear cost is determined based on a gear corresponding to the candidate path point, so that the parking path is planned based on a driving habit and driving experience of the user, and the planned parking path can be easily understood and accepted by the user, thereby further improving user experience of automatic parking.

With reference to the first aspect, in some implementations of the first aspect, the location relationship between the first candidate path point and the first area includes a distance between the first candidate path point and a first boundary, and the first boundary is a boundary through which the vehicle passes when entering the first area.

In this application, the cost corresponding to the candidate path point is determined based on a distance between the candidate path point and the boundary through which the vehicle passes when traveling into the first area during parking, so that accuracy of the determined cost of the unexpected passing area can be improved.

According to a second aspect, an automatic parking apparatus is provided. The apparatus may include: an obtaining unit, configured to obtain a first candidate path point and a second candidate path point, where the first candidate path point is located in a first area, and the second candidate path point is located in a second area; and a processing unit, configured to: determine a first cost based on a type of the first area and a location relationship between the first candidate path point and the first area, determine a second cost based on a type of the second area and a location relationship between the second candidate path point and the second area, and plan a parking path based on the first cost and the second cost.

With reference to the second aspect, in some implementations of the second aspect, a vehicle is at a first gear in a first planned path, the vehicle is at a second gear in a first candidate path, and the first candidate path is a predicted path between the first planned path and the first candidate path point. The processing unit may be further configured to: obtain a first speed at which the vehicle passes through the first planned path and first duration in which the vehicle passes through the first candidate path; when the first gear is different from the second gear, determine a first traveling distance based on the first speed and the first duration; and determine a third cost based on the first traveling distance and a length of the first candidate path. The processing unit may be configured to plan the parking path based on the first cost, the second cost, and the third cost.

With reference to the second aspect, in some implementations of the second aspect, the processing unit may be further configured to: obtain a first steer angle at which the vehicle passes through a second planned path and a second steer angle at which the vehicle passes through a second candidate path, where the second candidate path is a predicted path between the second planned path and the first candidate path point; and when a direction of the first steer angle is different from a direction of the second steer angle, determine a fourth cost based on the first steer angle and the second steer angle. The processing unit may be configured to plan the parking path based on the first cost, the second cost, and the fourth cost.

With reference to the second aspect, in some implementations of the second aspect, the first steer angle is a maximum value in steer angles used by the vehicle when the vehicle passes through the second planned path.

With reference to the second aspect, in some implementations of the second aspect, the processing unit may be further configured to: determine a type of a surrounding obstacle; determine a fifth cost based on a distance between the first candidate path point and the surrounding obstacle and the type of the surrounding obstacle; and determine a sixth cost based on a distance between the second candidate path point and the surrounding obstacle and the type of the surrounding obstacle. The processing unit may be configured to plan the parking path based on the first cost, the second cost, the fifth cost, and the sixth cost.

With reference to the second aspect, in some implementations of the second aspect, the type of the obstacle includes a dynamic obstacle or a static obstacle.

With reference to the second aspect, in some implementations of the second aspect, the vehicle is at a third gear in a third candidate path, the vehicle is at a fourth gear in a fourth candidate path, the third candidate path is a predicted path between a third planned path and the first candidate path point, and the fourth candidate path is a predicted path between the third planned path and the second candidate path point. The processing unit may be further configured to: determine a first gear cost coefficient based on the third gear, and determine a second gear cost coefficient based on the fourth gear; and determine a seventh cost based on the first gear cost coefficient and a length of the third candidate path, and determine an eighth cost based on the second gear cost coefficient and a length of the fourth candidate path. The processing unit may be configured to plan the parking path based on the first cost, the second cost, the seventh cost, and the eighth cost.

With reference to the second aspect, in some implementations of the second aspect, the location relationship between the first candidate path point and the first area includes a distance between the first candidate path point and a first boundary, and the first boundary is a boundary through which the vehicle passes when entering the first area.

According to a third aspect, an automatic parking apparatus is provided. The apparatus includes: a memory, configured to store a computer program; and a processor, configured to execute the computer program stored in the memory, to enable the apparatus to perform the method according to any one of the first aspect and the possible implementations of the first aspect.

According to a fourth aspect, a vehicle is provided. The vehicle includes the apparatus according to any one of the second aspect or the third aspect and the possible implementations of the second aspect or the third aspect.

According to a fifth aspect, a computer program product is provided. The computer program product includes computer program code, and when the computer program code is run on a computer, the computer is enabled to perform the method according to any one of the first aspect and the possible implementations of the first aspect.

According to a sixth aspect, a computer-readable storage medium is provided. The computer-readable medium stores a computer program, and when the computer program is run on a computer, the computer is enabled to perform the method according to any one of the first aspect and the possible implementations of the first aspect.

According to a seventh aspect, a chip is provided. The chip includes a circuit, configured to perform the method according to any one of the first aspect and the possible implementations of the first aspect.

## BRIEF DESCRIPTION OF DRAWINGS

FIG. 1 is a functional block diagram of a vehicle according to an embodiment of this application;
FIG. 2 is a diagram of a system architecture according to an embodiment of this application;
FIG. 3 is a schematic flowchart of an automatic parking method according to an embodiment of this application;
FIG. 4 is a diagram of a parking scenario according to an embodiment of this application;
FIG. 5 is a schematic flowchart of cost evaluation of collision risk avoidance according to an embodiment of this application;
FIG. 6 is a diagram of a parking planning scenario according to an embodiment of this application;
FIG. 7 is a diagram of a multi-circle equivalent model of a vehicle according to an embodiment of this application;
FIG. 8 is a diagram of a parking planning scenario according to an embodiment of this application;

FIG. 9 is a schematic flowchart of cost evaluation for an expected passing area according to an embodiment of this application;

FIG. 10 is a diagram of a parking planning scenario according to an embodiment of this application;

FIG. 11 is a diagram of another parking planning scenario according to an embodiment of this application;

FIG. 12 is a diagram of a vehicle speed change in a gear shift process according to an embodiment of this application;

FIG. 13 is a diagram of another parking planning scenario according to an embodiment of this application;

FIG. 14 is a diagram of another parking planning scenario according to an embodiment of this application;

FIG. 15 is a schematic flowchart of an automatic parking method according to an embodiment of this application;

FIG. 16 is a block diagram of an automatic parking apparatus according to an embodiment of this application; and

FIG. 17 is a block diagram of another automatic parking apparatus according to an embodiment of this application.

## DESCRIPTION OF EMBODIMENTS

The following describes technical solutions of embodiments in this application with reference to accompanying drawings.

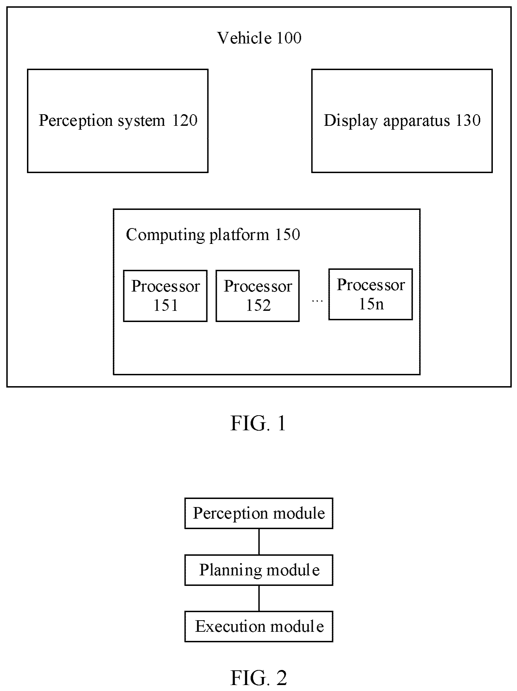

FIG. 1 is a functional block diagram of a vehicle 100 according to an embodiment of this application. The vehicle 100 may include a perception system 120, a display apparatus 130, and a computing platform 150. The perception system 120 may include one or more sensors that sense information about an ambient environment of the vehicle 100. For example, the perception system 120 may include a positioning system. The positioning system may be a global positioning system (global positioning system, GPS), a BeiDou system, or another positioning system. The perception system 120 may alternatively include one or more of an inertial measurement unit (inertial measurement unit, IMU), a lidar, a millimeter-wave radar, an ultrasonic radar, and a camera apparatus.

Some or all functions of the vehicle 100 may be controlled by a computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions, and some or all of the processors 151 to 15n may invoke the instructions in the memory, to implement a corresponding function.

The vehicle in this application is a vehicle in a broad sense, and may be a transportation tool (for example, a commercial vehicle, a passenger vehicle, or a motorcycle), an industrial vehicle (for example, a forklift truck, a trailer, or a tractor), an engineering vehicle (for example, an excavator, a bulldozer, or a crane), an agricultural device (for example, a lawn mower or a harvester), an amusement device, or a toy vehicle. A type of the vehicle is not specifically limited in embodiments of this application.

The vehicle 100 may include an advanced driving assistant system (advanced driving assistant system, ADAS). The ADAS obtains information around the vehicle by using a plurality of sensors (including but not limited to a lidar, a millimeter-wave radar, a camera apparatus, an ultrasonic sensor, a global positioning system, and an inertial measurement unit) on an intelligent driving device, and analyzes and processes the obtained information, to implement functions such as obstacle perceiving, target recognition, vehicle positioning, path planning, and driver monitoring/reminder. This improves driving safety, automation, and comfort.

In terms of logical functions, the ADAS system generally includes three main functional modules: a perception module, a decision-making module, and an execution module. The perception module perceives an ambient environment of a vehicle body by using the sensor, and inputs corresponding real-time data to a processing center at a decision-making layer, and the perception module mainly includes a vehicle-mounted camera, an ultrasonic radar, a millimeter-wave radar, a lidar, or the like. The decision-making module makes a corresponding decision based on information obtained by the perception module by using a computing apparatus and an algorithm. After receiving a decision-making signal from the decision module, the execution module takes a corresponding action, for example, driving, changing a lane, steering, braking, or warning.

Under different autonomous driving levels (L0 to L5), the ADAS can implement autonomous driving assistance at different levels according to an artificial intelligence algorithm and information obtained by the plurality of sensors. For example, the foregoing autonomous driving levels (L0 to L5) may be based on a grading standard of the society of automotive engineers (society of automotive engineers, SAE). L0 indicates no automation, L1 indicates driving assistance, L2 indicates partial automation, L3 indicates conditional automation, L4 indicates high automation, and L5 indicates full automation. Tasks of monitoring and responding to road conditions at the L1 to L3 levels are jointly completed by a driver and the system, and the driver needs to take over a dynamic driving task. The L4 and L5 levels enable the driver to be completely transformed into a passenger. Currently, functions that can be implemented by the ADAS mainly include but are not limited to adaptive cruise, automatic emergency braking, automatic parking, blind spot monitoring, traffic warning/braking at front crossroads, traffic warning/braking at rear crossroads, preceding vehicle collision warning, lane departure warning, lane keeping assist, trailing vehicle anti-collision warning, traffic sign recognition, traffic jam assist, and highway assist. It should be understood that the foregoing functions may have specific modes at different autonomous driving levels (L0 to L5). A higher autonomous driving level corresponds to a more intelligent mode. For example, automatic parking may include automatic parking assist (auto parking assist, APA), remote parking assist (remote parking assist, RPA), and automated valet parking (auto valet parking, AVP). For the APA, the driver does not need to control a steering wheel, but still needs to control a throttle and a brake on the vehicle. For the RPA, the driver may remotely park the vehicle outside the vehicle by using a terminal (for example, a mobile phone). For the AVP, the vehicle may complete parking without the driver. From a perspective of a corresponding autonomous driving level, the APA is approximately at the L1 level, the RPA is approximately at the L2 or L3 level, and the AVP is approximately at the L4 level.

As described above, currently, in a process in which an automatic parking system controls the vehicle to be parked into a parking space, a planned parking path is usually greatly different from a parking path in a manual parking scenario, that is, automatic parking has poor hominine potential, and automatic parking experience of a user is affected. For example, when an obstacle exists in a parking scenario, a safety threshold of a gap between the planned path and the obstacle is usually excessively extreme, and consequently, the driver is psychologically nervous, resulting in poor user experience. For another example, the planned parking path may occupy some passing areas, such as a lawn and a crossable curb, that are not expected by the driver. For another example, due to a time and experience of driving the vehicle by using a drive gear, the driver may tend to park by using the drive gear in the manual parking scenario. However, a gear and/or a gear shift occasion used in a conventional automatic parking solution may be greatly different from that used in manual parking. For another example, in the manual parking scenario, the driver usually has a clear parking idea. However, in a conventional automatic parking solution, the driver may frequently adjust a direction or change a direction. All the foregoing solutions may affect user experience of automatic parking. In view of this, this application provides an automatic parking method and apparatus, to improve parking experience of a user.

For example, FIG. 2 is a diagram of a system architecture according to an embodiment of this application. A system 200 may include a perception module, a planning module, and an execution module. The perception module may include one or more camera apparatuses and/or one or more radar sensors in the perception system 120 shown in FIG. 1. The perception module is configured to collect environment information around a vehicle, for example, information about a parking area and obstacle information. The perception module may alternatively process the collected environment information, for example, may establish a world model including a parking area, a road, an obstacle, and the like. The planning module may be the computing platform 150 shown in FIG. 1, or may be the one or more processors in the computing platform 150, or may be one or more processors in a cloud server associated with the vehicle 100 shown in FIG. 1. The planning module may be configured to: select a target parking area based on the information about the parking area; plan, based on the obstacle information and the target parking area, a motion path on which the vehicle is parked into the area; and further, calculate a corresponding control value based on the motion path. When the execution module executes the control value, the vehicle may be parked into the target parking area based on the planned motion path. In some possible implementations, the execution module may include a steering system and a braking system in the vehicle 100.

In an embodiment, the collected environment information is processed, so that map information including semantics may be obtained. Based on the semantic map, the planning module may obtain information about a target parking space, information about a surrounding dynamic obstacle and/or a surrounding static obstacle, a road structure, and the like. An obstacle distance potential field and a hominine passing area potential field are constructed, so that quality of a candidate motion path may be evaluated based on a kinematic feature of the vehicle in a process of planning the motion path, and a final parking trajectory of the target parking space is determined based on an optimal candidate motion path. The planning module may calculate a corresponding control value based on the final parking trajectory. The executor may implement a parking effect of closed-loop vehicle control based on a vehicle control instruction of the planning module.

In some possible implementations, the system may include more or fewer modules. This is not limited in embodiments of this application.

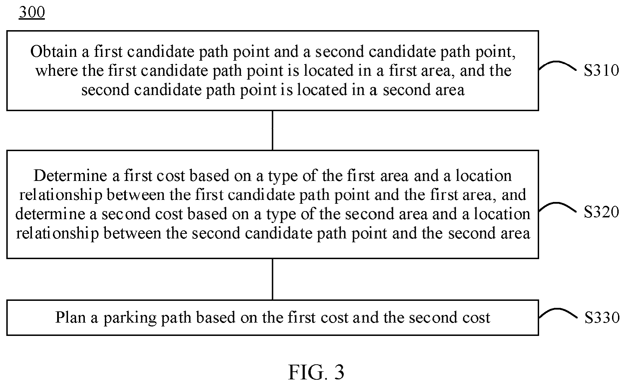

For example, FIG. 3 is a schematic flowchart of an automatic parking method according to an embodiment of this application. The method 300 may be performed by a vehicle, or may be performed by the foregoing computing platform, or may be performed by a processor or a processing circuit in the computing platform. The method 300 may include the following steps.

S310: Obtain a first candidate path point and a second candidate path point, where the first candidate path point is located in a first area, and the second candidate path point is located in a second area.

For example, during parking path planning, a path that needs to be planned in a next phase may involve a plurality of candidate path points, so as to determine a target path point from the plurality of candidate path points, to perform path planning in the next phase. The first candidate path point may be any candidate path point, and the second candidate path point may also be any candidate path point. For example, the first candidate path point and the second candidate path point have a same parent node. Parking path planning may be performed, so that a parking path after the parent node passes through the first candidate path point or the second candidate path point.

For example, a parking scenario may involve a plurality of areas, for example, areas in which a driver does not expect to pass, such as a grass, a vacant parking space, an area that includes a crossable curb, or an area that includes a small trench, for another example, areas in which a driver expects to pass, such as a passable road or a vacant flat ground. The first area may be any area, and the second area may be any area. During parking path planning, the involved candidate path points may be located in various areas.

S320: Determine a first cost based on a type of the first area and a location relationship between the first candidate path point and the first area, and determine a second cost based on a type of the second area and a location relationship between the second candidate path point and the second area.

For example, types of areas in the parking scenario may be determined based on data collected by a perception system and a preset classification rule.

In some possible implementations, an expected passing area and an unexpected passing area in the parking scenario may be determined. The expected passing area may represent the area in which the driver expects to pass, for example, may include a road, vacant open space, and the like. The unexpected passing area may represent the area in which the driver does not expect to pass, for example, may include a grass, an area in which a crossable curb is located, an area in which a vacant parking space is located, and an area in which a crossable trench is located.

In some possible implementations, a vegetation area, an area whose road flatness is lower than a preset condition, an area whose road flatness is higher than the preset condition, a fording area, and the like in the parking scenario may be determined. For example, the area whose road flatness is lower than the preset condition may include an area in which a crossable curb is located, an area in which a crossable trench is located, and the like.

In some possible implementations, a soil coverage area, a concrete coverage area, an asphalt coverage area, and the like in the parking scenario may be determined. For example, in the parking scenario, a concrete road may belong to the concrete coverage area, and an asphalt road may belong to the asphalt coverage area.

It should be understood that the foregoing descriptions about the type of the area are merely examples. This is not limited in embodiments of this application.

For example, the location relationship between the first candidate path point and the first area may be a distance between the first candidate path point and a boundary of the first area. For example, if the first candidate path point is located outside the unexpected passing area, or the first candidate path point is located in the expected passing area, the first cost may be zero. For another example, if the first candidate path point is located in the unexpected passing area, the first cost may be determined based on a distance by which the first candidate path point intrudes into the unexpected passing area.

S330: Plan a parking path based on the first cost and the second cost.

For example, the planning a parking path based on the first cost and the second cost may include: determining the target path point from the first candidate path point and the second candidate path point based on the first cost and the second cost, and planning the parking path based on the parent node and the target path point. In other words, the planning a parking path may be planning a parking path that is any segment of the entire parking path from a parking start location to a parking space.

In some possible implementations, the parent node may correspond to a plurality of candidate path points, separately determine costs corresponding to the plurality of candidate path points, determine the target path point based on the costs corresponding to the candidate path points, and plan the parking path between the parent node and the target path point.

Optionally, the vehicle is at a first gear in a first planned path, the vehicle is at a second gear in a first candidate path, the first candidate path is a predicted path between the first planned path and the first candidate path point, and the method may further include: obtaining a first speed at which the vehicle passes through the first planned path and first duration in which the vehicle passes through the first candidate path; when the first gear is different from the second gear, determining a first traveling distance based on the first speed and the first duration; and determining a third cost based on the first traveling distance and a length of the first candidate path. The planning a parking path based on the first cost and the second cost may include: planning the parking path based on the first cost, the second cost, and the third cost.

In an embodiment, the first candidate path node and the second candidate path node have a same parent node, the first candidate path may be a predicted path between the first candidate path node and the parent node, a second candidate path may be a predicted path between the second candidate path node and the parent node, and the first planned path may be a planned path or a predicted path between a parent node of the parent node and the parent node.

In another embodiment, the first speed may be understood as an eigenvalue of an estimated speed at which the vehicle passes through the first planned path. For example, during automatic parking, it is assumed that a parking speed when the vehicle uses a drive gear may be 3 kilometers per hour (kilometers per hour, km/h), and a parking speed when the vehicle uses a reverse gear is 2 km/h. The first speed may be determined based on a gear used when the vehicle passes through the first planned path. For another example, the first speed may be a maximum speed at which the vehicle passes through the first planned path. For another example, the first speed may be a planned speed before the vehicle brakes to decelerate near the parent node when passing through the first planned path.

In another embodiment, the first candidate path may be determined based on locations of the first candidate path node and the parent node. For example, a line segment connecting the first candidate path point and the parent node may be determined based on coordinates of the first candidate path point and the parent node, and the line segment may be considered as the first candidate path. For another example, after a cost of the first candidate path point is preliminarily determined based on the line segment, a path between the first candidate path point and the parent node is specifically planned in a path planning phase. For another example, the first candidate path may be predicted based on a plurality of path points including the first candidate path point, the parent node, a path point before the parent node, and the like.

In another embodiment, the first gear may be a drive gear, and the second gear may be a reverse gear. Alternatively, the first gear may be a reverse gear, and the second gear may be a drive gear. Alternatively, the first gear and the second gear may be other gears.

In another embodiment, the first duration may be understood as predicted duration in which the vehicle travels from the parent node to the first candidate path point during parking planning. For example, a distance that can be traveled by the vehicle in a non-gear shift case, that is, the first traveling distance, may be calculated based on the first duration and the first speed. For another example, the length of the first candidate path may be understood as a distance that can be traveled by the vehicle in a gear shift case in the first duration. Based on a difference between the first traveling distance and the length of the first candidate path, a difference between a distance that can be traveled in the gear shift case and a distance that can be traveled in the non-gear shift case within the first duration may be learned. For another example, a cost caused by gear shift involved in the first candidate path point may be determined based on the difference.

Optionally, the method may further include: obtaining a first steer angle at which the vehicle passes through a second planned path and a second steer angle at which the vehicle passes through a second candidate path, where the second candidate path is a predicted path between the second planned path and the first candidate path point; and when a direction of the first steer angle is different from a direction of the second steer angle, determining a fourth cost based on the first steer angle and the second steer angle. The planning a parking path based on the first cost and the second cost may include: planning the parking path based on the first cost, the second cost, and the fourth cost.

In an embodiment, the second planned path may be a planned path, for example, may be a planned path or a predicted path between a parent node of the first candidate node and a parent node of the parent node. In other words, the second planned path and the first planned path may be a same path. For another example, the second planned path may be a planned path, using the parent node as an end point, on which a gear does not change. For another example, the second planned path may be a planned path, using the parent node as an end point, on which the vehicle travels in a forward posture or in a reverse posture. For another example, the second candidate planned path may be a predicted path between the parent node and the first candidate path point.

In another embodiment, the first steer angle may be an eigenvalue of a steer angle at which the vehicle passes through the second planned path. For example, the first steer angle may be an average value of steer angles at which the vehicle passes through the second planned path. For another example, the first steer angle may be a maximum value in steer angles at which the vehicle passes through the second planned path. For another example, the first steer angle may be an angle that is a preset proportion (for example, 70% or 80%) of the maximum value in the steer angles. It should be understood that the first steer angle may alternatively be another eigenvalue of the steer angle in the second planned path. This is not limited in embodiments of this application.

In another embodiment, when the vehicle uses the first steer angle, the vehicle turns left, and when the vehicle uses the second steer angle, the vehicle turns right. Therefore, it may be considered that the first steer angle and the second steer angle have different directions.

In some possible implementations, the first steer angle may be the maximum value in the steer angles used by the vehicle when the vehicle passes through the second planned path.

Optionally, the method may further include: determining a type of a surrounding obstacle; and determining a fifth cost based on a distance between the first candidate path point and the surrounding obstacle and the type of the surrounding obstacle, and determining a sixth cost based on a distance between the second candidate path point and the surrounding obstacle and the type of the surrounding obstacle. The planning a parking path based on the first cost and the second cost may include: planning the parking path based on the first cost, the second cost, the fifth cost, and the sixth cost.

For example, a type of an obstacle around the vehicle may be determined based on environment information around the vehicle. An obstacle distance cost of a candidate path point may be calculated based on the type of the obstacle and a distance between the candidate path point and the obstacle.

In some possible implementations, the type of the obstacle may include a static obstacle or a dynamic obstacle. For example, the obstacle may be determined as a static obstacle or a dynamic obstacle based on a moving speed of the obstacle.

In an embodiment, it is assumed that the obstacle around the vehicle includes a standing pedestrian and a parking lot column. Because the column does not move, the column can be regarded as a static obstacle. When a distance between the candidate path point and the pedestrian is equal to a distance between the path point and the column, although the pedestrian is in a standing state and a speed of the pedestrian is zero, because the pedestrian may move at any time, a risk caused by the pedestrian is different from that caused by the column. The pedestrian can be regarded as a dynamic obstacle.

In another embodiment, it is assumed that the obstacle around the vehicle includes an adult, a child, and an animal. Compared with the child and the animal, the adult can easily avoid a driving vehicle. When a distance between the candidate path point and the adult is equal to a distance between the candidate path point and the child, a risk caused by the child is higher, and an obstacle distance cost corresponding to the child may be greater. For example, an obstacle distance cost coefficient corresponding to the obstacle may be determined based on the type of the obstacle, and the obstacle distance cost is determined based on the distance between the candidate path point and the obstacle.

Optionally, the vehicle is at a third gear in a third candidate path, the vehicle is at a fourth gear in a fourth candidate path, the third candidate path is a predicted path between a third planned path and the first candidate path point, the fourth candidate path is a predicted path between the third planned path and the second candidate path point, and the method may further include: determining a first gear cost coefficient based on the third gear, and determining a second gear cost coefficient based on the fourth gear; and determining a seventh cost based on the first gear cost coefficient and a length of the third candidate path, and determining an eighth cost based on the second gear cost coefficient and a length of the fourth candidate path. The planning a parking path based on the first cost and the second cost may include: planning the parking path based on the first cost, the second cost, the seventh cost, and the eighth cost.

In an embodiment, the first candidate path node and the second candidate path node have a same parent node, and the third planned path may be understood as a planned path before the parent node. The third candidate path may be a predicted path between the first candidate path node and the parent node, and the second candidate path may be a predicted path between the second candidate path node and the parent node.

In another embodiment, because drivers have different use habits, experience, and the like of the gear, a corresponding gear cost coefficient may be determined based on gear information corresponding to the candidate path point, and a gear cost corresponding to the candidate path point may be determined based on a length of a candidate path between the candidate path point and the parent node and the gear cost coefficient. For example, the parking path may be planned based on the first cost, the second cost, a gear cost corresponding to the first candidate path point, and a gear cost corresponding to the second candidate path point.

In some possible implementations, the location relationship between the first candidate path point and the first area includes a distance between the first candidate path point and a first boundary, and the first boundary is a boundary through which the vehicle passes when entering the first area.

In some possible implementations, the method 300 may be performed by a cloud server, or may be performed by a chip, a processing circuit, or the like disposed in the cloud server. For example, the cloud server may exchange information with the vehicle. The cloud server may plan a parking path, and may indicate the planned parking path to the vehicle by delivering an instruction.

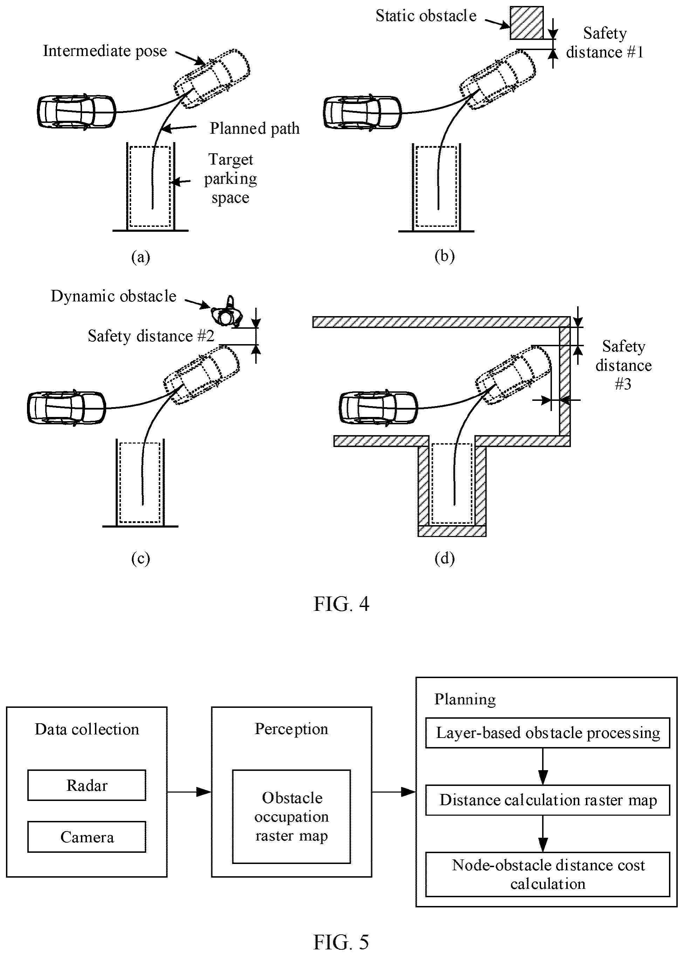

For ease of understanding and description, the following describes a lane keeping method provided in embodiments of this application with reference to FIG. 4 to FIG. 15. The method embodiments in FIG. 4 to FIG. 15 may be understood as an extension of the method 300.

During parking planning, if only a safety threshold of the distance between the vehicle and the obstacle is set to determine whether there is a collision risk, the planned trajectory may be excessively extreme. In some possible scenarios, when the safety threshold is set improperly, there may still be a collision risk, and it is prone to touching a takeover boundary of the driver, making the driver psychologically nervous. The following provides descriptions with reference to scenarios shown in FIG. 4.

For example, FIG. 4 is a diagram of a parking scenario according to an embodiment of this application. FIG. 4 describes a parking scenario in which there are different types of obstacles around a vehicle.

In an embodiment, in a scenario shown in (a) in FIG. 4, a distance between a surrounding obstacle and the vehicle in the scenario is long. This has little impact on a parking process of the vehicle. Based on a planned path, the vehicle may travel to an intermediate pose from a current location, and then drive into a target parking space.

In another embodiment, in a scenario shown in (b) in FIG. 4, there is a static obstacle (for example, a cone or a parking lot column) around the vehicle. When a parking path of the vehicle is planned, a distance between the vehicle and the static obstacle needs to be considered, to avoid a collision risk caused by an excessively short distance. For example, when the vehicle is in the intermediate pose, the distance between the vehicle and the static obstacle should be greater than or equal to a safety distance #1 (for example, 0.5 meters or 0.3 meters). In other words, in a process in which the vehicle automatically parks based on the planned path, the distance between the vehicle and the static obstacle should be greater than or equal to the safety distance #1.

In another embodiment, in a scenario shown in (c) in FIG. 4, there is a dynamic obstacle (for example, a pedestrian or a moving vehicle) around the vehicle. When a parking path of the vehicle is planned, a risk of collision between the vehicle and the dynamic obstacle needs to be considered. For example, when the vehicle is in the intermediate pose, the distance between the vehicle and the dynamic obstacle should be greater than or equal to a safety distance #2 (for example, 0.6 meters or 1 meter).

If the type of the obstacle is not considered, a same safety distance is set for the dynamic obstacle and the static obstacle. For example, the safety distance #1 is the same as the safety distance #2. Because the obstacle in (c) in FIG. 4 is a dynamic obstacle, if the safety distance #2 is the same as the safety distance #1, and is set to a small value, in the parking process, when the dynamic obstacle moves, if the vehicle does not brake or the driver does not take over in time, a risk of collision between the vehicle and the dynamic obstacle may be caused. If the safety distance #2 is the same as the safety distance #1, and is set to a large value, although a risk of collision with the dynamic obstacle can be avoided, in the scenario shown in (b) in FIG. 4, a probability of successful automatic parking planning may be reduced. In addition, in a manual parking process, the driver tends to keep a longer safety distance between the vehicle and the dynamic obstacle.

In some possible implementations, the safety distance #2 may be greater than the safety distance #1.

In this embodiment of this application, the safety distance is determined based on the type of the obstacle, so that a success rate of automatic parking can be ensured while a collision between the vehicle and the surrounding obstacle is avoided, a hominine potential of automatic parking can be improved, and tension caused to the driver due to an improper safety distance between the vehicle and the obstacle can be avoided.

In another embodiment, in a scenario shown in (d) in FIG. 4, the vehicle is in narrow space for parking. In comparison with the scenario in (a), (b), or (c) in FIG. 4, because the space for parking is narrow, when the parking path of the vehicle is planned, surrounding space needs to be used as much as possible to plan a motion path of the vehicle to ensure a success rate of automatic parking. For example, in this scenario, when the vehicle is in the intermediate pose, the distance between the vehicle and the obstacle should be greater than or equal to a safety distance #3 (for example, 0.3 meters or 0.2 meters). For another example, compared with the scenario shown in (b) in FIG. 4, in the scenario shown in (d) in FIG. 4, when the vehicle is in the intermediate pose, the obstacle (for example, a wall) around the vehicle is a static obstacle, and a distance between the vehicle and the static obstacle may be less than the distance between the vehicle and the static obstacle in the scenario shown in (b) in FIG. 4. In other words, the safety distance #3 may be less than the safety distance #1, to improve a success rate of automatic parking of the vehicle in the narrow space. In addition, in a manual parking process, when parking in the narrow space, the driver tends to use space around the vehicle as much as possible.

In this embodiment of this application, whether the vehicle is in the narrow space for parking is determined, and the safety distance is determined, so that a success rate of automatic parking can be ensured while collision between the vehicle and the surrounding obstacle is avoided, and a hominine potential of automatic parking can be improved. For example, compared with parking in the narrow space, when parking in open space, the safety distance between the vehicle and the obstacle is set to a large value, so that tension caused to the driver due to an improper safety distance between the vehicle and the obstacle can be avoided.

With reference to FIG. 5 to FIG. 7, the following briefly describes an automatic parking method based on a type of an obstacle, so that in various parking scenarios in FIG. 4, a success rate of automatic parking can be ensured, and a risk of collision between a vehicle and a surrounding obstacle can be reduced.

For example, types and distribution of obstacles in an environment in which the vehicle is located may be determined based on ambient environment information of the vehicle; and costs corresponding to extended nodes in motion path planning may be determined based on the types and distribution of the obstacles. The extended node may be understood as the candidate path point in the method 300.

In some possible implementations, a two-dimensional or three-dimensional world model may be constructed based on the ambient environment information, and types of obstacles in the world model may be identified. For example, the two-dimensional world model may include a raster map obtained after rasterizing processing is performed on an ambient environment image. For another example, rasterizing processing is performed on a 1000*1000-pixel image to obtain a raster map. Each raster in the raster map may occupy 1*1 pixel, or each raster may occupy a plurality of pixels (for example, 1*2, 2*2, or 2*4 pixels), so as to reduce occupancy of calculation and improve a calculation speed.

In some possible implementations, after fusion processing is performed on radar point cloud data collected by a lidar and an ultrasonic radar, and an ambient environment image collected by a camera sensor, the raster map including obstacle type information may be obtained.

For example, FIG. 5 is a schematic flowchart of cost evaluation of collision risk avoidance according to an embodiment of this application. Sensors, such as a radar and a camera, of a perception system can be used to collect data to obtain ambient environment information. Rasterizing processing is performed on the ambient environment information, so that a raster map may be obtained, and then obstacle distribution information corresponding to the raster map may be obtained. Based on the raster map and the obstacle distribution information, different types of obstacles may be processed separately, and obstacle distance costs of the extended nodes may be calculated.

In an embodiment, a risk type of the raster may be determined based on a type of an obstacle included in the raster. For example, when the obstacle in the raster is a dynamic obstacle like a human or a vulnerable road user (vulnerable road users, VRU), the raster may be at a high risk level. For another example, when the obstacle in the raster is a static obstacle like a cone, a column, a tree, or a wall, the raster may be at a low risk level. For another example, different levels of labels may be configured for obstacles at different risk levels. For another example, rasters at different risk levels may occupy different map layers of the raster map. For another example, binarization may be performed on a raster map of each map layer, to determine a raster occupied by an obstacle in the map layer, so as to determine a distance between an extended node on a planned trajectory and a surrounding obstacle. Risk costs of collision with the obstacle that correspond to the extended nodes are determined, so that a target node may be determined from the plurality of extended nodes.

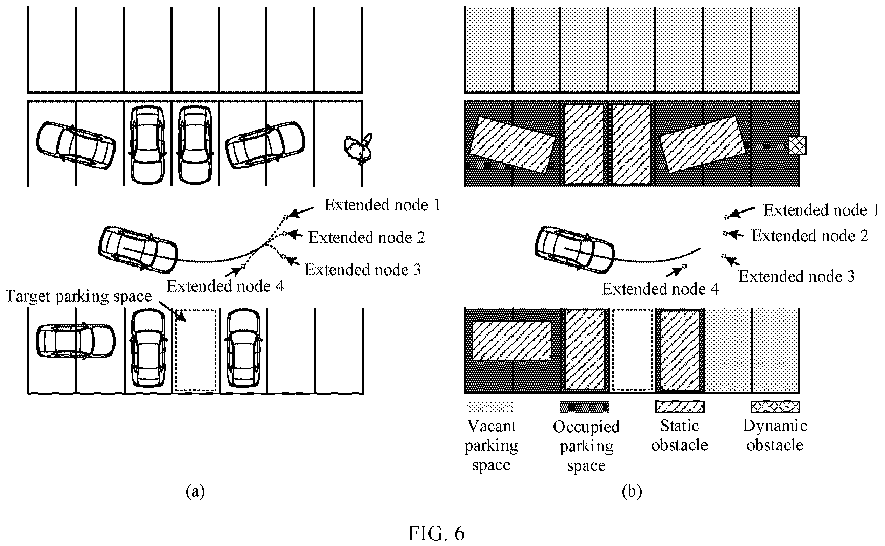

The following briefly describes a parking planning scenario shown in FIG. 6.

For example, FIG. 6 is a diagram of a parking planning scenario according to an embodiment of this application. As shown in (a) in FIG. 6, obstacles such as a vehicle and a pedestrian may be included around a vehicle. An extended node 1 to an extended node 4 are candidate nodes for planning a next parking trajectory. Risk costs of the plurality of extended nodes are determined, so that the target node may be determined from the plurality of extended nodes. For example, (a) in FIG. 6 may be understood as a two-dimensional world model constructed based on ambient environment information, or may be understood as a raster map obtained after rasterizing processing.

In an embodiment, as shown in (b) in FIG. 6, the pedestrian may be determined as a dynamic obstacle.

In another embodiment, it may be determined, based on a speed of each surrounding vehicle, that the vehicle is a static obstacle or a dynamic obstacle.

In another embodiment, a vacant parking space and/or an occupied parking space in a parking area may be determined based on distribution of the obstacles.

For example, the pedestrian may be set at a map layer 1 of the raster map. For another example, a vehicle in a parking state (that is, a static obstacle) may be set at a map layer 0 of the raster map, and a vehicle in a driving state may be set at a map layer 1 of the raster map. For another example, as shown in (b) in FIG. 6, a distance between the vehicle and each dynamic obstacle at the map layer 1 and a distance between the vehicle and each static reference object at the map layer 0 may be determined when the vehicle is located at the extended nodes 1 to 4.

In some possible implementations, the vehicle may be equivalent to a geometric shape based on a vehicle body parameter of the vehicle, and the distance between the vehicle and the obstacle is calculated based on a corresponding geometric shape. For example, the vehicle may be equivalent to a polygon (for example, a rectangle). For another example, the vehicle may be equivalent to a plurality of circles.

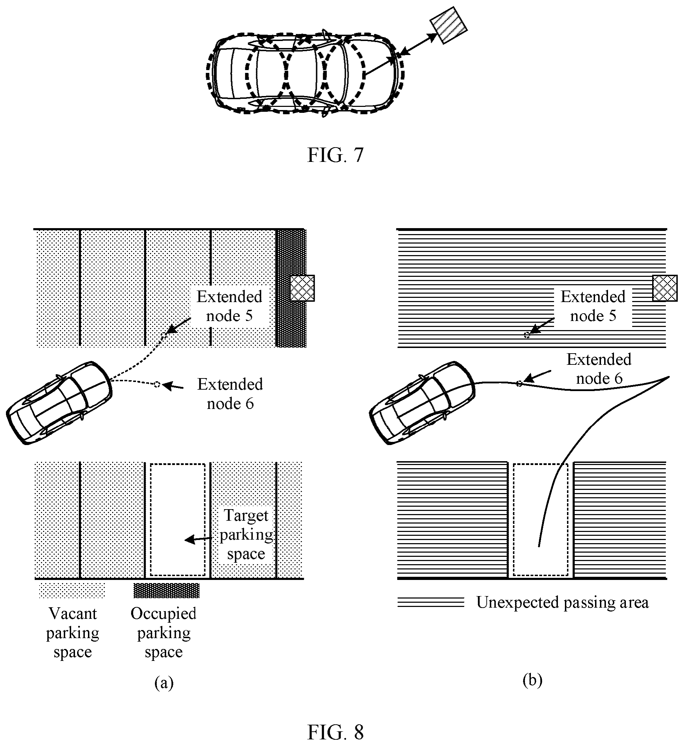

For example, FIG. 7 is a diagram of a multi-circle equivalent model of a vehicle according to an embodiment of this application. As shown in FIG. 7, a vehicle body may be equivalent to a plurality of circles that can wrap a contour of the vehicle body. Correspondingly, the distance between the vehicle and the obstacle may be equivalent to a difference between a distance between the obstacle and a center of a circle closest to the obstacle and a radius of the circle.

In some possible implementations, an obstacle distance cost of the extended node may be determined based on the distance between the vehicle and the obstacle. For example, a shortest distance between the extended node and the surrounding obstacle may be calculated in each map layer of the raster map, to obtain an obstacle distance potential field value, where the obstacle distance potential field value may be represented as ObstaclePotentialCost = max ($w_0 \times$ max$((\text{dist}_{safe} - \text{dist}_0), 0), ..., w_i \times$ max$((\text{dist}_{safe} - \text{dist}_i), 0))$. $\text{dist}_{safe}$ may be understood as a safety distance, i represents an $i^{th}$ obstacle, and $w_i$ represents an obstacle distance cost coefficient corresponding to the $i^{th}$ obstacle. The obstacle distance cost coefficient corresponding to the obstacle may be determined based on the type of the obstacle. For another example, distance cost coefficients of the obstacles may be determined based on information like a risk degree and a planned vehicle speed. It may be understood that a higher risk degree corresponding to the type of the obstacle indicates a higher planned vehicle speed and a larger obstacle distance cost coefficient.

For example, according to the embodiments in FIG. 4 to FIG. 7, an obstacle distance cost of a candidate path point may be determined. In other words, according to the embodiments in FIG. 4 to FIG. 7, the seventh cost and the eighth cost involved in the method 300 may be determined.

In a process of planning a parking trajectory, the vehicle may pass through an area (which may also be referred to as an unexpected area or an unexpected passing area) outside an area expected by the driver, for example, a lawn, a crossable curb, a small trench, or an empty parking space. For example, when the planned parking path involves passing through a lawn, vegetation of the lawn may be damaged. For another example, when the planned parking path involves passing through a crossable curb and/or a small trench, ride comfort may be affected and even there may be an unexpected collision risk. However, in a manual parking scenario, the foregoing area is usually avoided, and when it is difficult to avoid, the foregoing area is passed as little as possible. The following provides descriptions with reference to scenarios shown in FIG. 8.

For example, FIG. 8 is a diagram of a parking planning scenario according to an embodiment of this application. As shown in (a) in FIG. 8, extended nodes 5 and 6 may be understood as candidate nodes for planning a next parking trajectory. The extended node 5 is located in a parking space area, and the extended node 6 is located outside the parking space area.

In an embodiment, an unexpected passing area in the scenario shown in (a) in FIG. 8 may be shown in (b) in FIG. 8. In a manual parking scenario, the extended nodes 5 and 6 may alternatively be understood as two different waypoints on the parking path. As described above, in the manual parking scenario, the vehicle usually travels in the unexpected passing area as little as possible. The parking path in the manual parking scenario may be shown in (b) in FIG. 8.

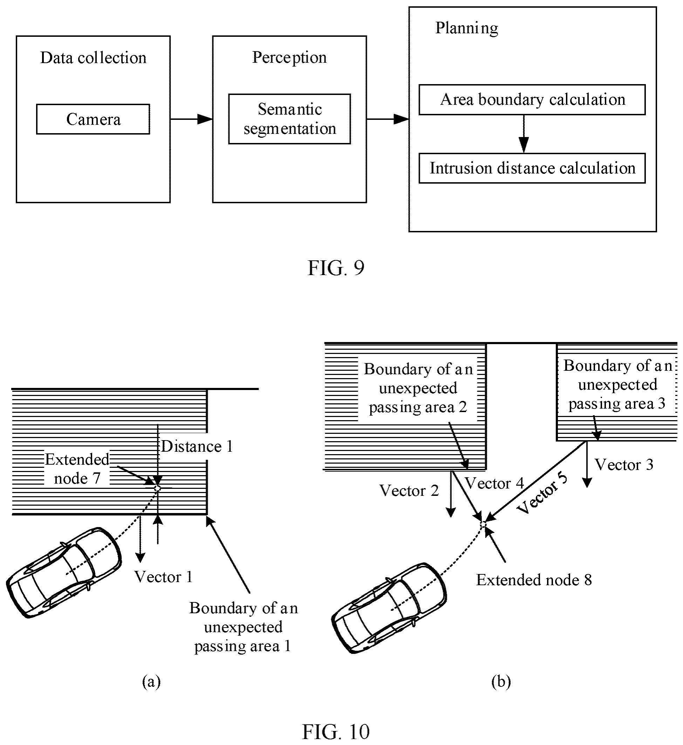

With reference to FIG. 9 and FIG. 10, the following briefly describes an automatic parking method based on an expected passing area of a driver, so that in the parking scenario in FIG. 8, a success rate of automatic parking can be ensured, and it can be ensured that a vehicle travels in an unexpected passing area as little as possible during parking.

For example, the expected passing area and the unexpected passing area may be determined based on ambient environment information of the vehicle, and a cost corresponding to each extended node in motion path planning may be determined based on the expected passing area and the unexpected passing area.

For example, FIG. 9 is a schematic flowchart of cost evaluation for an expected passing area according to an embodiment of this application. A sensor of a perception system is used to collect data to obtain ambient environment information, for example, an environment image. The expected passing area and the unexpected passing area may be determined through semantic segmentation. Cluster analysis is performed on the expected passing area and/or the unexpected passing area in the parking scenario, so that a boundary line between the expected passing area and the unexpected passing area can be determined, or a boundary of the unexpected passing area can be determined. When the extended node is located in the unexpected passing area, a cost corresponding to the extended node may be determined based on a distance (which may also be referred to as an intrusion distance) between the extended node and the contour. The following briefly describes a parking planning scenario shown in FIG. 10.

For example, FIG. 10 is a diagram of a parking planning scenario according to an embodiment of this application.

In an embodiment, the boundary of the unexpected passing area is shown in (a) in FIG. 10, and the extended node 7 is located in the unexpected passing area. Based on a motion path planned based on the extended node 7, the vehicle enters the unexpected passing area through the boundary of the area. For example, as shown in (a) in FIG. 10, a distance 1 may be understood as an intrusion distance corresponding to the extended node 7. For another example, a vector 1 shown in (a) in FIG. 10 may be understood as a vector perpendicular to the boundary, and the intrusion distance may be understood as a distance between the extended node 7 and the boundary in a direction of the vector 1. For another example, the intrusion distance may be understood as a length of a path between the boundary and the extended node 7 along a candidate parking path corresponding to the extended node 7.

In another embodiment, as shown in (b) in FIG. 10, an unexpected passing area 2 and an unexpected passing area 3 may be areas of different types. For example, the unexpected passing area 2 may be a grass, and the unexpected passing area 3 may be an area in which a crossable curb is located.

In another embodiment, when a plurality of unexpected passing areas are involved, intrusion distances of the extended node to the plurality of unexpected passing areas may be determined based on boundaries of the plurality of unexpected passing areas. For example, as shown in (b) in FIG. 10, a vector 2 and a vector 3 are unit vectors perpendicular to boundaries of two unexpected passing areas, and a vector 4 and a vector 5 are vectors constituted between the boundaries of the two unexpected passing areas and the extended node 8. An intrusion distance (denoted as DistToPlane) of an extended node 8 to the unexpected passing area 2 may be calculated based on point multiplication of the vector 2 and the vector 4. If DistToPlane is positive, it is indicated that the node does not intrude into the area. If DistToPlane is negative, it is indicated that the node intrudes into the area. For another example, a hominine potential cost (denoted as a hominine potential cost) of the extended node may be represented as hominine potential cost = max ($w_1 \times$ max(-DistToPlanet$_1$, 0), ..., $w_i \times$ max(-DistToPlane$_i$, 0)) , where DistToPlane$_i$ may be understood as an intrusion distance of the extended node to an $i^{th}$ unexpected passing area, and $w_i$ may be understood as a cost coefficient corresponding to the $i^{th}$ unexpected passing area. For another example, cost coefficients corresponding to all unexpected passing areas may be the same. For another example, the unexpected passing areas may be further subdivided. For example, a cost coefficient corresponding to an area in which a vacant parking space is located may be less than a cost coefficient corresponding to an area in which a crossable curb is located.

For example, according to the embodiments in FIG. 8 to FIG. 10, a cost caused by intrusion of the candidate path point into the unexpected passing area may be determined based on a type of the area and a location relationship between the candidate path point and the area.

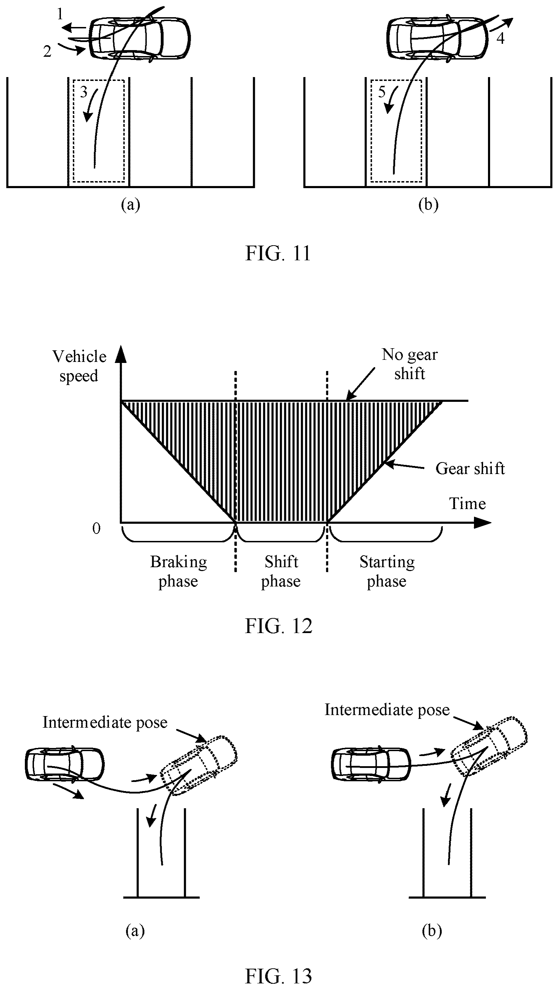

In a manual parking scenario, because a time and experience of driving a vehicle by the driver by using a drive gear are far greater than a time and experience of driving the vehicle by using a reverse gear, the driver usually tends to start the vehicle by using the drive gear to adjust a vehicle pose, and control the vehicle to reverse into a parking space by using the reverse gear. However, in a conventional automatic parking method, the vehicle usually starts by using the reverse gear, and consequently, an automatic parking scenario greatly differs from a manual parking scenario. The following provides descriptions with reference to scenarios shown in FIG. 11.

For example, FIG. 11 is a diagram of a parking planning scenario according to an embodiment of this application. (a) and (b) in FIG. 11 may be understood as different parking planning solutions in a same parking environment.

In an embodiment, as shown in (a) in FIG. 11, during parking, the vehicle starts by using the reverse gear, passes through paths 1 to 3, and is controlled to reverse into the parking space by using the reverse gear. This process undergoes gear shift twice.

In another embodiment, as shown in (b) in FIG. 11, during parking, the vehicle starts by using the drive gear, passes through paths 1 and 2, and is controlled to reverse into the parking space by using the reverse gear. This process undergoes gear shift once.

As described above, the time and experience of driving the vehicle by the driver by using the drive gear are far greater than the time and experience of driving the vehicle by using the reverse gear. To enable a case of automatic parking to be similar to a case of manual parking, a cost of an extended node may be determined based on a gear corresponding to the extended node.

For example, when a travelling gear corresponding to the extended node is a drive gear, a gear cost corresponding to the extended node may be calculated by using a gear cost coefficient 1. When the travelling gear corresponding to the extended node is a reverse gear, the gear cost corresponding to the extended node may be calculated by using a gear cost coefficient 2. The gear cost coefficient 1 is less than the gear cost coefficient 2.

In an embodiment, the scenario shown in (a) in FIG. 6 is used as an example. The vehicle may travel to the extended node 1 by using the drive gear, and may travel to the extended node 4 by using the reverse gear. For example, a gear cost corresponding to the extended node 1 may be calculated based on a length of a planned path between an end point of the planned path and the extended node 1 and the gear cost coefficient 1. For another example, a gear cost corresponding to the extended node 4 may be calculated based on a length of a planned path between an end point of the planned path and the extended node 4 and the gear cost coefficient 2. For another example, the gear cost coefficient 1 is 1.0, and the gear cost coefficient 2 is 2.0. The end point of the planned path may be understood as a parent node of the extended node.

In another embodiment, distances between all extended node in the extended node 1 to the extended node 4 and the end point of the planned path are equal. For example, the distance is denoted as step. For example, a gear cost of each extended node may be represented as distancecost = $w_d \times$ *step,* where $w_d$ may be represented as a gear cost coefficient corresponding to the extended node. For another example, the gear cost coefficient may alternatively be related to a parking speed, and the gear cost coefficient may be represented as

$$w_d = \begin{cases} 1.0 \text{ drive gear parking speed 3 km/h} \\ 1.5 \text{ reverse gear parking speed 2 km/h} \end{cases}$$

, which may indicate that the gear cost coefficient is 1.0 during parking by using the drive gear at a parking speed of 3 km/h, and the gear cost coefficient is 1.5 during parking by using the reverse gear at a parking speed of 2 km/h.

For example, in a process of planning a parking trajectory, when a corresponding gear for travelling from a planned path before a parent node to the parent node is different from a gear for travelling from the parent node to an extended node, the extended node involves gear shift. For example, the extended node is the extended node 4 shown in (a) in FIG. 6. Because a gear shift process can be divided into a braking phase, a shift phase, and a starting phase, a traveling distance of the vehicle is lost in the gear shift process. For example, FIG. 12 is a diagram of a vehicle speed change in a gear shift process according to an embodiment of this application. When a preset parking speed is used within a same time, a distance traveled by the vehicle in a gear shift scenario is less than a distance traveled by the vehicle in a non-gear shift scenario.

In some possible implementations, the gear shift cost may be determined based on a difference between the travelling distance in the gear shift scenario and the travelling distance in the non-gear shift scenario. For example, the extended node 4 in (a) in FIG. 6 is used as an example. A time 1 and a traveling distance 1 that are used for traveling from the parent node to the extended node 4 in the gear shift case may be estimated. An expected traveling distance 2 corresponding to the time 1 in the non-gear shift scenario may be estimated based on a uniform motion model, the parking speed of the vehicle on the parent node, and the time 1. A gear shift cost corresponding to the extended node 4 may be determined based on a difference between the traveling distance 1 and the expected traveling distance 2.

In an automatic scenario, if a steer angle of the vehicle is frequently adjusted, a tracking error of a control variable in a closed-loop control process is increased, and the planned parking trajectory is not smooth enough. If a size of the steer angle in the parking process is limited, the parking trajectory may become longer and a quantity of gear shift times may increase, or the parking process may require larger space. Because space in a parking environment is usually narrow, to improve a parking success rate, in the manual parking scenario, the driver usually controls, by operating a steering wheel, the vehicle to travel at a maximum steer angle. In addition, the driver usually has a clear parking idea, and rarely frequently adjusts a steering wheel angle in the parking process. Correspondingly, for a single-segment planned path, in few cases, the vehicle travels along an S-shaped trajectory. The following provides descriptions with reference to scenarios shown in FIG. 13.

For example, FIG. 13 is a diagram of a parking planning scenario according to an embodiment of this application. (a) and (b) in FIG. 13 may be understood as different parking planning solutions in a same parking environment.

In an embodiment, as shown in (a) in FIG. 13, during parking, the vehicle travels rightward first, and then travels leftward to an intermediate pose, and then the vehicle is controlled to reverse into the parking space by using the reverse gear. In a process in which the vehicle travels to the intermediate pose by using the drive gear, a motion path of the vehicle is S-shaped.

In another embodiment, as shown in (b) in FIG. 13, during parking, the vehicle travels leftward to an intermediate pose, and then the vehicle is controlled to reverse into the parking space by using the reverse gear.

As described above, in the manual parking scenario, because the driver usually has a clear parking idea, for a single-segment planned path, for example, a planned path before the intermediate pose shown in (b) in FIG. 13, in few cases, the vehicle travels along an S-shaped trajectory.

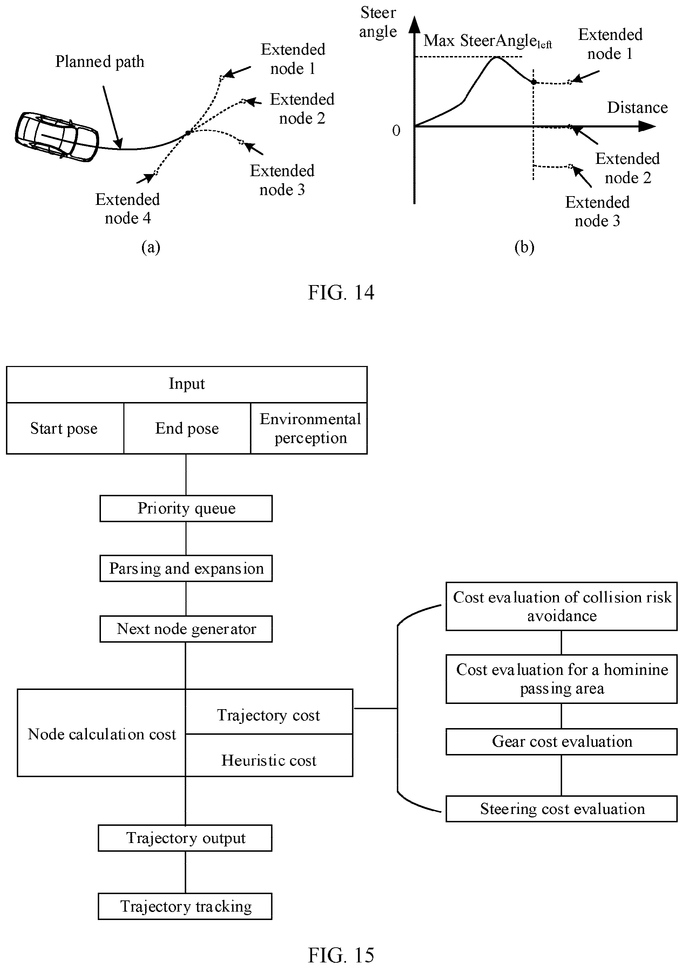

For example, when a direction of an expected steer angle of a single-segment path before the parent node is different from that of a steer angle corresponding to the extended node, a steering cost of the extended node may be determined based on the expected steer angle of the single-segment path. The following briefly describes a parking planning scenario shown in FIG. 14.

For example, FIG. 14 is a diagram of a parking planning scenario according to an embodiment of this application. (b) in FIG. 14 may be understood as a vehicle steer angle corresponding to a planned path in (a) in FIG. 14.

In an embodiment, as shown in (a) in FIG. 14, an end point of the planned path may be understood as a parent node of extended nodes 1 to 4. In a process of traveling from the end point of the planned path to any one of the extended nodes 1 to 3, gear shifting does not need to be performed. A path in which the vehicle travels from a current location of the vehicle to the extended node 1, 2, or 3 along the planned path may be understood as a single-segment path. However, when the vehicle travels from the current location to the extended node 4 along the planned path, gear shifting needs to be performed. In this case, the planned path may be considered as a single-segment path, and a path between the parent node and the extended node may be understood as another single-segment path.

In another embodiment, a change of the steer angle in a process in which the vehicle travels from the current location to the parent node may be shown in (b) in FIG. 14. If the steer angle is positive, it may be understood that the vehicle turns left, and if the steer angle is negative, it may be understood that the vehicle turns right. A maximum value of the steer angle corresponding to the planned path may be denoted as max $\text{SteerAngle}_{left}$, and a subscript left may indicate that a direction of the steer angle of the vehicle in the path is leftward. For example, for the extended node 1, if a direction of a steer angle corresponding to the extended node 1 is the same as a direction of max $\text{SteerAngle}_{left}$, and the steer angle corresponding to the extended node 1 is less than max $\text{SteerAngle}_{left}$, it may be understood that a steer angle in a path in which the vehicle travels to the extended node 1 returns to a positive direction. For another example, for the extended node 2, if a steer angle corresponding to the extended node 2 is zero, it may be understood that in a process in which the vehicle travels from the current location to the extended node 2 along the planned path, when the vehicle travels to the extended node 2, the steer angle of the vehicle completely returns to the positive direction. For another example, in a process in which the vehicle travels from the current location to the extended node 3 along the planned path, the vehicle travels based on an S-shaped curve. Because a planned trajectory corresponding to the extended node 3 is in an S shape, a steering cost corresponding to the extended node 3 should be greater than a steering cost corresponding to the extended node 1 and/or a steering cost corresponding to the extended node 2.

In another embodiment, the steering cost corresponding to the extended node 3 may be determined based on an expected steering angle in a path (that is, the planned path) that uses the parent node as the end point. For example, the expected steer angle may be the foregoing max $\text{SteerAngle}_{left}$, or may be an average steer angle in the path. For another example, the expected steer angle may be another characteristic steer angle or the like in the path. This is not limited in embodiments of this application.

For example, an example in which an expected steer angle of a single-segment path that uses the parent node as the end point is max SteerAngle is used below for brief description. A steer angle of the vehicle at the extended node is denoted as SteerAngle, and a direction of the steer angle may be represented by using a subscript left or right. For example, when the expected steer angle max SteerAngle of the single-segment path is rightward, and the steer angle SteerAngle corresponding to the extended node is leftward, a steering cost of leftward $\text{SteerAngle}_{left}$ caused by the extended node may be positively correlated with max $\text{SteerAngle}_{right}$. For another example, when the expected steer angle max SteerAngle of the single-segment path is leftward, and the steer angle SteerAngle corresponding to the extended node is rightward, a steering cost of leftward $\text{SteerAngle}_{right}$ caused by the extended node may be positively correlated with max $\text{SteerAngle}_{left}$.

In some possible implementation scenarios, the steering cost of the extended node may be represented as $\text{SteerAngleCost} = w_{bs} \times SteerAngle + w_{ds} \times |SteerAngle - SteerAngle_{last}| + C_1 \times SteerAngle_{right} + C_2 \times SteerAngle_{left}$, where *SteerAngle* may represent a steer angle at the extended node, $SteerAngle_{last}$ may represent a steer angle at the parent node, and $w_{bs}$, $w_{ds}$, $C_1$, and $C_2$ are cost coefficients. $C_1$ and $C_2$ may be related to an expected steer angle in a planned path before the parent node. For example, when the steer angle corresponding to the extended node is leftward, $SteerAngle_{right}$ may be considered as zero. For another example, when the steer angle corresponding to the extended node is rightward, $SteerAngle_{left}$ may be considered as zero. For another example, $C_1$ = max ($SteerAngle_{left1}$, $SteerAngle_{left2}$, ...), where $SteerAngle_{left1}$, $SteerAngle_{left2}$, and the like may represent steer angles at a plurality of path points in the planned path before the parent node, and directions of the plurality of steer angles are leftward. For another example, $C_2$ = max ($SteerAngle_{right1}$, $SteerAngle_{right2}$, ...), where $SteerAngle_{right1}$ and $SteerAngle_{right2}$ may represent steer angles at a plurality of path points in the path, and directions of the plurality of steer angles are rightward.

For example, FIG. 15 is a schematic flowchart of an automatic parking method according to an embodiment of this application.

In some possible implementations, parking planning may be performed based on a start pose of a vehicle, an end pose for parking in a parking space, and ambient environment of the vehicle.

In some possible implementations, a plurality of extended nodes may be obtained through parsing based on a priority queue in a parking planning process, and trajectory costs corresponding to the nodes are determined. For example, a cost of avoiding a collision risk may be evaluated based on a distance between the extended node and an obstacle. For another example, a hominine passing area cost, that is, an unexpected passing cost, may be evaluated based on a location relationship between the extended node and an unexpected passing area. For another example, a gear cost may be evaluated based on a gear corresponding to the extended node. For another example, when the extended node involves gear shift, a corresponding gear shift cost may be evaluated. For another example, a steering cost may be evaluated based on a steer angle corresponding to the extended node. For another example, various costs involved in the extended nodes may be determined with reference to the embodiments in FIG. 3 to FIG. 14.

In an embodiment, based on a trajectory cost, a node calculation cost, and a heuristic cost that correspond to the extended node, the target extended node may be determined from the plurality of extended nodes, and the path between the parent node and the extended node may be planned. Parking of the vehicle may be controlled based on the planned path.

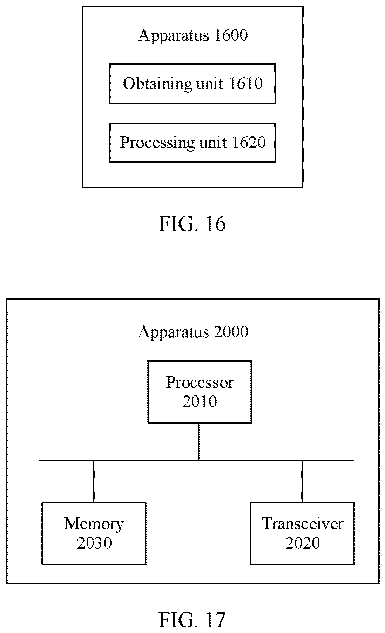

The methods provided in embodiments of this application are described above in detail with reference to FIG. 3 to FIG. 15. Apparatuses provided in embodiments of this application are described below in detail with reference to FIG. 16 and FIG. 17. Descriptions of apparatus embodiments correspond to the descriptions of the method embodiments. Therefore, for content that is not described in detail, refer to the foregoing method embodiments.

For example, FIG. 16 is a block diagram of an automatic parking apparatus 1600 (briefly referred to as an apparatus 1800 below) according to an embodiment of this application. The apparatus may include an obtaining unit 1610 and a processing unit 1620.

The apparatus 1600 may include units for performing any method in FIG. 3 to FIG. 15, and the units in the apparatus 1600 may be configured to perform corresponding procedures in the method embodiments in FIG. 3 to FIG. 15.

When the apparatus 1600 is configured to perform the method 300 in FIG. 3, the obtaining unit 1610 may be configured to perform step S310 in the method 300, and the processing unit 1620 may be configured to perform steps S320 and S330 in the method 300.

Specifically, the obtaining unit 1610 may be configured to obtain a first candidate path point and a second candidate path point, where the first candidate path point is located in a first area, and the second candidate path point is located in a second area. The processing unit 1620 may be configured to: determine a first cost based on a type of the first area and a location relationship between the first candidate path point and the first area, determine a second cost based on a type of the second area and a location relationship between the second candidate path point and the second area, and plan a parking path based on the first cost and the second cost.

Optionally, a vehicle is at a first gear in a first planned path, the vehicle is at a second gear in a first candidate path, and the first candidate path is a predicted path between the first planned path and the first candidate path point. The processing unit 1620 may be further configured to: obtain a first speed at which the vehicle passes through the first planned path and first duration in which the vehicle passes through the first candidate path; when the first gear is different from the second gear, determine a first traveling distance based on the first speed and the first duration; and determine a third cost based on the first traveling distance and a length of the first candidate path. The processing unit 1620 may be configured to plan the parking path based on the first cost, the second cost, and the third cost.

Optionally, the processing unit 1620 may be further configured to: obtain a first steer angle at which the vehicle passes through a second planned path and a second steer angle at which the vehicle passes through a second candidate path, where the second candidate path is a predicted path between the second planned path and the first candidate path point; and when a direction of the first steer angle is different from a direction of the second steer angle, determine a fourth cost based on the first steer angle and the second steer angle. The processing unit 1620 may be configured to plan the parking path based on the first cost, the second cost, and the fourth cost.

Optionally, the first steer angle is a maximum value in steer angles used by the vehicle when the vehicle passes through the second planned path.

Optionally, the processing unit 1620 may be further configured to: determine a type of a surrounding obstacle; determine a fifth cost based on a distance between the first candidate path point and the surrounding obstacle and the type of the surrounding obstacle; and determine a sixth cost based on a distance between the second candidate path point and the surrounding obstacle and the type of the surrounding obstacle. The processing unit 1620 may be configured to plan the parking path based on the first cost, the second cost, the fifth cost, and the sixth cost.

Optionally, the type of the obstacle includes a dynamic obstacle or a static obstacle.

Optionally, the vehicle is at a third gear in a third candidate path, the vehicle is at a fourth gear in a fourth candidate path, the third candidate path is a predicted path between a third planned path and the first candidate path point, and the fourth candidate path is a predicted path between the third planned path and the second candidate path point. The processing unit 1620 may be further configured to: determine a first gear cost coefficient based on the third gear, and determine a second gear cost coefficient based on the fourth gear; and determine a seventh cost based on the first gear cost coefficient and a length of the third candidate path, and determine an eighth cost based on the second gear cost coefficient and a length of the fourth candidate path. The processing unit 1620 may be configured to plan the parking path based on the first cost, the second cost, the seventh cost, and the eighth cost.

Optionally, the location relationship between the first candidate path point and the first area includes a distance between the first candidate path point and a first boundary, and the first boundary is a boundary through which the vehicle passes when entering the first area.

It should be understood that division into the foregoing units of the apparatus is merely logical function division. In actual implementation, all or some units may be integrated into one physical entity, or may be physically separated. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit. In addition, all or some of the units of the apparatus may be integrated, or may be implemented independently.

In a specific implementation process, the obtaining unit 1610 may be implemented by at least one transceiver or a transceiver-related circuit, and the processing unit 1620 may be implemented by at least one processor or a processor-related circuit. In an example, one or more processors may determine the first cost and the second cost. In an example, the one or more processors may plan the parking path based on the first cost and the second cost.

For example, in the specific implementation process, the apparatus 1600 may be the vehicle 100 shown in FIG. 1, or the apparatus 1600 may be a terminal disposed in the vehicle, for example, the computing platform 150. Alternatively, the apparatus 1600 may be a processor or a chip in the terminal, for example, a processor or a chip in the computing platform 150.

In some possible implementations, the apparatus 1600 may be a cloud server, or may be a chip, a processing circuit, or the like disposed in the cloud server. For example, the cloud server may exchange information with the vehicle, and the cloud server may indicate the planned parking path by delivering an instruction.

For example, FIG. 17 is a block diagram of another automatic parking apparatus 2000 (briefly referred to as an apparatus 2000 below) according to an embodiment of this application. The apparatus 2000 may include a processor 2010, an interface circuit 2020, and a memory 2030. The processor 2010, the interface circuit 2020, and the memory 2030 are connected through an internal connection path. The memory 2030 is configured to store instructions. The processor 2010 is configured to execute the instructions stored in the memory 2030, to receive/send some parameters through the interface circuit 2020. Optionally, the memory 2030 may be coupled to the processor 2010 through an interface, or may be integrated with the processor 2010.

In some possible implementations, the apparatus 2000 may be disposed in the vehicle 100 shown in FIG. 1. In an embodiment, the apparatus 2000 may be the computing platform 150 shown in FIG. 1. In another embodiment, the apparatus 2000 may be a processor or a chip of the computing platform 150.

In some possible implementations, the apparatus 2000 may be a cloud server, or may be a chip, a processing circuit, or the like disposed in the cloud server. For example, the cloud server may exchange information with the vehicle, and the cloud server may indicate the planned parking path by delivering an instruction.

It should be noted that the interface circuit 2020 may include but is not limited to a transceiver apparatus like an input/output interface (input/output interface), to implement communication between the apparatus 2000 and another device.

The interface circuit 2020 may be configured to implement communication between the apparatus 2000 and another device or a communication network. For example, information collected by a sensor may be obtained through the interface circuit 2020, and an execution apparatus of the vehicle may be controlled to perform a corresponding operation.

An embodiment of this application further provides an automatic parking system. The system may include one or more sensors and a computing platform. The computing platform includes the apparatus 1600 or the apparatus 2000.

An embodiment of this application further provides a vehicle. The vehicle includes the apparatus 1600 or the apparatus 2000.

An embodiment of this application further provides a server. The server includes the apparatus 1600 or the apparatus 2000.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions, and when the computer instructions are run on a computer, the computer is enabled to implement the methods in the foregoing embodiments of this application.

An embodiment of this application further provides a chip, including a circuit, configured to perform the methods in the foregoing embodiments of this application.

In an implementation process, steps in the foregoing methods can be implemented by using a hardware integrated logical circuit in a processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that, for the purpose of convenient and brief description, for a detailed working process and beneficial effects of the foregoing system, apparatus, and unit, refer to a corresponding process in the foregoing method embodiments. Details are not described herein again.

Terms in embodiments of this application are used only for the purpose of describing specific embodiments, but are not intended to limit this application. The terms "one", "a" and "this" of singular forms used in this specification and the appended claims of this application are also intended to include expressions such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.   An automatic parking method, comprising:

obtaining a first candidate path point and a second candidate path point, wherein the first candidate path point is located in a first area, and the second candidate path point is located in a second area;
determining a first cost based on a type of the first area and a location relationship between the first candidate path point and the first area, and determining a second cost based on a type of the second area and a location relationship between the second candidate path point and the second area; and
planning a parking path based on the first cost and the second cost.

2.   The method according to claim 1, wherein a vehicle is at a first gear in a first planned path, the vehicle is at a second gear in a first candidate path, the first candidate path is a predicted path between the first planned path and the first candidate path point, and the method further comprises:

obtaining a first speed at which the vehicle passes through the first planned path and first duration in which the vehicle passes through the first candidate path;
when the first gear is different from the second gear, determining a first traveling distance based on the first speed and the first duration; and
determining a third cost based on the first traveling distance and a length of the first candidate path; and
the planning a parking path based on the first cost and the second cost comprises:
planning the parking path based on the first cost, the second cost, and the third cost.

3.   The method according to claim 1 or 2, wherein the method further comprises:

obtaining a first steer angle at which the vehicle passes through a second planned path and a second steer angle at which the vehicle passes through a second candidate path, wherein the second candidate path is a predicted path between the second planned path and the first candidate path point; and
when a direction of the first steer angle is different from a direction of the second steer angle, determining a fourth cost based on the first steer angle and the second steer angle; and
the planning a parking path based on the first cost and the second cost comprises:
planning the parking path based on the first cost, the second cost, and the fourth cost.

4.   The method according to claim 3, wherein the first steer angle is a maximum value in steer angles used by the vehicle when the vehicle passes through the second planned path.

5.   The method according to any one of claims 1 to 4, wherein the method further comprises:

determining a type of a surrounding obstacle; and
determining a fifth cost based on a distance between the first candidate path point and the surrounding obstacle and the type of the surrounding obstacle, and determining a sixth cost based on a distance between the second candidate path point and the surrounding obstacle and the type of the surrounding obstacle; and
the planning a parking path based on the first cost and the second cost comprises:
planning the parking path based on the first cost, the second cost, the fifth cost, and the sixth cost.

6.   The method according to any one of claims 1 to 5, wherein the type of the obstacle comprises a dynamic obstacle or a static obstacle.

7.   The method according to any one of claims 1 to 6, wherein the vehicle is at a third gear in a third candidate path, the vehicle is at a fourth gear in a fourth candidate path, the third candidate path is a predicted path between a third planned path and the first candidate path point, the fourth candidate path is a predicted path between the third planned path and the second candidate path point, and the method further comprises:

determining a first gear cost coefficient based on the third gear, and determining a second gear cost coefficient based on the fourth gear; and
determining a seventh cost based on the first gear cost coefficient and a length of the third candidate path, and determining an eighth cost based on the second gear cost coefficient and a length of the fourth candidate path; and
the planning a parking path based on the first cost and the second cost comprises:
planning the parking path based on the first cost, the second cost, the seventh cost, and the eighth cost.

8. The method according to any one of claims 1 to 7, wherein the location relationship between the first candidate path point and the first area comprises a distance between the first candidate path point and a first boundary, and the first boundary is a boundary through which the vehicle passes when entering the first area.

9. An automatic parking apparatus, comprising:

an obtaining unit, configured to obtain a first candidate path point and a second candidate path point, wherein the first candidate path point is located in a first area, and the second candidate path point is located in a second area; and
a processing unit, configured to: determine a first cost based on a type of the first area and a location relationship between the first candidate path point and the first area, and determine a second cost based on a type of the second area and a location relationship between the second candidate path point and the second area; and plan a parking path based on the first cost and the second cost.

10. The apparatus according to claim 9, wherein a vehicle is at a first gear in a first planned path, the vehicle is at a second gear in a first candidate path, the first candidate path is a predicted path between the first planned path and the first candidate path point, and the processing unit is further configured to:

obtain a first speed at which the vehicle passes through the first planned path and first duration in which the vehicle passes through the first candidate path;
when the first gear is different from the second gear, determine a first traveling distance based on the first speed and the first duration; and
determine a third cost based on the first traveling distance and a length of the first candidate path; and
the processing unit is configured to:
plan the parking path based on the first cost, the second cost, and the third cost.

11. The apparatus according to claim 9 or 10, wherein the processing unit is further configured to:

obtain a first steer angle at which the vehicle passes through a second planned path and a second steer angle at which the vehicle passes through a second candidate path, wherein the second candidate path is a predicted path between the second planned path and the first candidate path point; and
when a direction of the first steer angle is different from a direction of the second steer angle, determine a fourth cost based on the first steer angle and the second steer angle; and
the processing unit is configured to:
plan the parking path based on the first cost, the second cost, and the fourth cost.

12. The apparatus according to claim 11, wherein the first steer angle is a maximum value in steer angles used by the vehicle when the vehicle passes through the second planned path.

13. The apparatus according to any one of claims 9 to 12, wherein the processing unit is further configured to:

determine a type of a surrounding obstacle; and
determine a fifth cost based on a distance between the first candidate path point and the surrounding obstacle and the type of the surrounding obstacle, and determine a sixth cost based on a distance between the second candidate path point and the surrounding obstacle and the type of the surrounding obstacle; and
the processing unit is configured to:
plan the parking path based on the first cost, the second cost, the fifth cost, and the sixth cost.

14. The apparatus according to any one of claims 9 to 13, wherein the type of the obstacle comprises a dynamic obstacle or a static obstacle.

15. The apparatus according to any one of claims 9 to 14, wherein the vehicle is at a third gear in a third candidate path, the vehicle is at a fourth gear in a fourth candidate path, the third candidate path is a predicted path between a third planned path and the first candidate path point, the fourth candidate path is a predicted path between the third planned path and the second candidate path point, and the processing unit is further configured to:

  determine a first gear cost coefficient based on the third gear, and determine a second gear cost coefficient based on the fourth gear; and
  determine a seventh cost based on the first gear cost coefficient and a length of the third candidate path, and determine an eighth cost based on the second gear cost coefficient and a length of the fourth candidate path; and
  the processing unit is configured to:
  plan the parking path based on the first cost, the second cost, the seventh cost, and the eighth cost.

16. The apparatus according to any one of claims 9 to 15, wherein the location relationship between the first candidate path point and the first area comprises a distance between the first candidate path point and a first boundary, and the first boundary is a boundary through which the vehicle passes when entering the first area.

17. An automatic parking apparatus, comprising:

  a memory, configured to store a computer program; and
  a processor, configured to execute the computer program stored in the memory, to enable the apparatus to perform the method according to any one of claims 1 to 8.

18. An automatic parking system, wherein the system comprises one or more sensors and a computing platform, and the computing platform comprises the apparatus according to any one of claims 9 to 17.

19. A vehicle, comprising the apparatus according to any one of claims 9 to 17, or the system according to claim 18.

20. A computer-readable storage medium, wherein the computer-readable storage medium stores a computer program, and when the computer program is executed by a computer, the computer is enabled to perform the method according to any one of claims 1 to 8.

Vehicle 100

Perception system 120

Display apparatus 130

Computing platform 150

Processor 151

Processor 152

...

Processor 15n

FIG. 1

Perception module

Planning module

Execution module

FIG. 2

300

| | |
|---|---|
| Obtain a first candidate path point and a second candidate path point, where the first candidate path point is located in a first area, and the second candidate path point is located in a second area | S310 |

| | |
|---|---|
| Determine a first cost based on a type of the first area and a location relationship between the first candidate path point and the first area, and determine a second cost based on a type of the second area and a location relationship between the second candidate path point and the second area | S320 |

| | |
|---|---|
| Plan a parking path based on the first cost and the second cost | S330 |

FIG. 3

FIG. 4

FIG. 5

Extended node 1
Extended node 2
Extended node 3
Extended node 4
Target parking space

Extended node 1
Extended node 2
Extended node 3
Extended node 4

Vacant parking space     Occupied parking space     Static obstacle     Dynamic obstacle

(a)

(b)

FIG. 6

EP 4 667 310 A1

FIG. 7

Extended
node 5

Extended
node 6

Target
parking
space

Vacant
parking
space

Occupied
parking
space

(a)

Extended
node 5

Extended
node 6

Unexpected passing area

(b)

FIG. 8

FIG. 9

(a)

(b)

FIG. 10

FIG. 11

FIG. 12

FIG. 13

FIG. 14

FIG. 15

Apparatus 1600

Obtaining unit 1610

Processing unit 1620

FIG. 16

Apparatus 2000

Processor
2010

Memory
2030

Transceiver
2020

FIG. 17

## INTERNATIONAL SEARCH REPORT

| International application No. |
| --- |
| **PCT/CN2024/080119** |

**A. CLASSIFICATION OF SUBJECT MATTER**

B60W30/06(2006.01)i; G01C21/34(2006.01)i

According to International Patent Classification (IPC) or to both national classification and IPC

**B. FIELDS SEARCHED**

Minimum documentation searched (classification system followed by classification symbols)

IPC: B60W, G01C

Documentation searched other than minimum documentation to the extent that such documents are included in the fields searched

Electronic data base consulted during the international search (name of data base and, where practicable, search terms used)

CNTXT, VEN, ENTXT, CJFD: 路径, 区域, 位置, 规划, 第一, 第二, Path, region, location, plan+, first, second

**C. DOCUMENTS CONSIDERED TO BE RELEVANT**

| Category* | Citation of document, with indication, where appropriate, of the relevant passages | Relevant to claim No. |
| --- | --- | --- |
| A | WO 2021227304 A1 (HUIZHOU DESAY SV AUTOMOTIVE CO., LTD.) 18 November 2021 (2021-11-18) description, page 3, last paragraph-page 6, last paragraph, and figures 1-5 | 1-20 |
| A | CN 112590775 A (CHINA FAW CO., LTD.) 02 April 2021 (2021-04-02) see entire document | 1-20 |
| A | CN 113985871 A (SHANGHAI OFILM INTELLIGENT VEHICLE CO., LTD) 28 January 2022 (2022-01-28) see entire document | 1-20 |
| A | CN 115489516 A (BEIJING BINLI INFORMATION TECHNOLOGY CO., LTD.) 20 December 2022 (2022-12-20) see entire document | 1-20 |
| A | DE 102017216442 A1 (PANASONIC AUTOMOTIVE & INDUSTRIAL SYSTEMS EUROPE GMBH) 21 March 2019 (2019-03-21) see entire document | 1-20 |

☑ Further documents are listed in the continuation of Box C. ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **31 May 2024** | **11 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/080119** |

| C. | DOCUMENTS CONSIDERED TO BE RELEVANT | |
| --- | --- | --- |
| Category* | Citation of document, with indication, where appropriate, of the relevant passages | Relevant to claim No. |
| A | WO 2020132959 A1 (BAIDU.COM TIMES TECHNOLOGY (BEIJING) CO., LTD.: BAIDU USA LLC) 02 July 2020 (2020-07-02)<br>see entire document | 1-20 |
| A | WO 2021180035 A1 (CHINA FAW CO., LTD.) 16 September 2021 (2021-09-16)<br>see entire document | 1-20 |
| A | WO 2022133684 A1 (HUAWEI TECHNOLOGIES CO., LTD.) 30 June 2022 (2022-06-30)<br>see entire document | 1-20 |

Form PCT/ISA/210 (second sheet) (July 2022)

**INTERNATIONAL SEARCH REPORT**
Information on patent family members

International application No.

**PCT/CN2024/080119**

| Patent document cited in search report | | | Publication date (day/month/year) | Patent family member(s) | | | Publication date (day/month/year) |
|---|---|---|---|---|---|---|---|
| WO | 2021227304 | A1 | 18 November 2021 | None | | | |
| CN | 112590775 | A | 02 April 2021 | None | | | |
| CN | 113985871 | A | 28 January 2022 | None | | | |
| CN | 115489516 | A | 20 December 2022 | None | | | |
| DE | 102017216442 | A1 | 21 March 2019 | None | | | |
| WO | 2020132959 | A1 | 02 July 2020 | JP | 2021511998 | A | 13 May 2021 |
| | | | | JP | 7149288 | B2 | 06 October 2022 |
| | | | | EP | 3694756 | A4 | 19 August 2020 |
| | | | | EP | 3694756 | A1 | 17 November 2021 |
| | | | | US | 2021188307 | A1 | 24 June 2021 |
| | | | | US | 11180160 | B2 | 23 November 2021 |
| WO | 2021180035 | A1 | 16 September 2021 | None | | | |
| WO | 2022133684 | A1 | 30 June 2022 | EP | 4261092 | A1 | 18 October 2023 |
| | | | | EP | 4261092 | A4 | 22 May 2024 |

Form PCT/ISA/210 (patent family annex) (July 2022)

**EP 4 667 310 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310284876